# EUROPEAN PATENT APPLICATION

(11) **EP 1 883 009 A2**
(43) Date of publication of application: **30.01.2008**
(21) Application number: 07105954.7
(22) Date of filing: 11.04.2007
(51) Int. Cl.: G06F 3/048

(54) **User interface device with rotatable ring type menu**

(30) Priority: 24.07.2006 KR 20060069394
(71) Applicant: Samsung Electronics Co., Ltd., Suwon-si, Gyeonggi-Do (KR)
(72) Inventor: Kwon, Giang-yoon, Gyeonggi-do (KR); Kwak, Ji-yeon, Seoul (KR)
(74) Representative: Grünecker, Kinkeldey, Stockmair & Schwanhäusser Anwaltssozietät

(57) **Abstract**

A user interface device and a method of implementing the same. The user interface includes a first menu layer of a ring type including one or more menus, and a second menu layer of a ring type to display sub-menus of the menus included in the first menu layer. The first menu layer and the second menu layer make it possible to move the menus around a common center axis. Accordingly, a user can easily assess the position of a selected menu.

## Description

### BACKGROUND OF THE INVENTION

### 1. Field of the Invention

The present general inventive concept relates to a user interface device. More particularly, the present general inventive concept relates to a user interface device and a method of implementing the same, which can implement a user interface (UI) required to perform various kinds of functions for electronic appliances by displaying text and/or graphics on a display screen.

### 2. Description of the Related Art

A user interface is a kind of interface that enables a user to conveniently use electronic appliances by displaying menus required to manipulate functions of the electronic appliance, an operation state of the electronic appliance, setting environments, and so forth, by text and/or graphics on a display screen.

Recently, as functions of electronic appliances become more diverse and complicated, user interfaces have also become complicated, so much so that a user frequently finds difficulty in using the electronic appliances. That is, since the layout of a user interface is complicated, a user cannot use all of the functions of the electronic appliance, or his misuse may cause a malfunction of the electronic appliance.

Additionally, due to the standardized structure of a user interface, a user may become bored in using the electronic appliance. That is, since the user cannot change the default structure of the user interface which is set when the electronic appliance is manufactured, the user may feel bored with the text or graphics that constitute the user interface, the background design of the user interface, and so forth.

Accordingly, a need exists for a user interface (UI) that facilitates a user's manipulation of various kinds of electronic appliances and is appealing to the user.

### SUMMARY OF THE INVENTION

The present general inventive concept provides a user interface device and a method of implementing the same, which can implement a user interface (UI) so that a user can easily find a position of a selected menu to increase user convenience.

The present general inventive concept also provides a user interface device and a method of implementing the same, which can increase the operating appeal of the electronic appliance in order for a user to not feel bored in using the electronic appliances.

Additional aspects and advantages of the present general inventive concept will be set forth in part in the description which follows and, in part, will be obvious from the description, or may be learned by practice of the general inventive concept.

The foregoing and other aspects and advantages of the present general inventive concept may be achieved by providing a user interface including a first menu layer arrayed in a ring type manner, the first menu layer including at least one or more menus, and a second menu layer arrayed in a ring type manner, the second menu layer capable of displaying sub-menus corresponding to the menus of the first menu layer, wherein the first menu layer and the second menu layer are rotatable about a common center axis.

The user interface may further contain a third menu layer arrayed in a ring type manner, the third menu layer capable of displaying sub-menus corresponding to the menus of the second menu layer, wherein the first menu layer, the second menu layer, and the third menu layer are rotatable about the common center axis.

If any one of the menus included in the first menu layer is selected, the second menu layer containing the sub-menus of the selected menu may be actualized, wherein at least one of the ring arrangement and size of the first menu layer is reduced, and the actualized ring arrangement of the second menu layer may be formed to one side of the first menu layer.

The foregoing and/or other aspects of the present general inventive concept may also be achieved by providing a method of implementing a user interface, the method including providing a perspective view of an arrangement of a plurality of upper menus and corresponding icons about a first ring, and rotating the arrangement about the first ring so that an upper menu searched among the plurality of upper menus and its corresponding icon are positioned at a specified area of a display screen.

The rotating of the first ring may include rotating the arrangement about the first ring so that the searched upper menu and its corresponding icon are positioned on a vertical center axis of the screen, and enlarging the searched upper menu and its corresponding icon.

The implementing of the user interface may further include upon the searched upper menu being selected, shrinking the first ring's arrangement, and providing a perspective view of an arrangement of a plurality of sub-menus of the selected upper menu and corresponding icons about a second ring that surrounds the first ring.

The implementing of the user interface may further include rotating the searched sub-menu and its corresponding icon so as to position the searched sub-menu and its corresponding icon on the vertical center axis of the screen, and enlarging the searched sub-menu and the corresponding icon.

The foregoing and/or other aspects of the present general inventive concept may be also achieved by providing a user interface including a first menu layer including one or more menus, and a second menu layer to display sub-menus of the menus included in the first menu layer, wherein if any one of the menus included in the first menu layer is selected, the first menu layer is moved in a specified direction.

The first menu layer and the second menu layer may move their respective menus around a common center axis, and the center axis may be changeable.

The foregoing and/or other aspects of the present general inventive concept may also be achieved by providing a method of implementing a user interface with respect to a specified menu, the method including displaying a menu, moving the menu, and displaying a prompt icon together with the moving menu.

The implementing of the user interface may further include changing the prompt icon, and displaying the changed prompt icon.

The prompt icon may be displayed as having the form of at least one of a starlight and a circle.

The menu may be scrolled up and down in accordance with a search command.

The implementing of the user interface may further include upon the searched menu being selected, displaying the prompt icon with an enhanced brightness.

The foregoing and/or other aspects of the present general inventive concept may also be achieved by providing a user interface device including a user interface (UI) generation unit to generate a perspective view of a plurality of upper menus and corresponding icons which are arranged about a first ring, and a control unit to control the UI generation unit to position a searched upper menu and the corresponding icon to a specified area of a display screen in accordance with a search command.

The control unit may control the UI generation unit to rotate the plurality of upper menus and corresponding icons about the first ring, and enlarge and position the searched upper menu and the corresponding icon on a vertical center axis to a display screen, in accordance with the search command.

The control unit may control the UI generation unit to generate a second perspective view of a plurality of sub-menus and corresponding icons which are arranged on a second ring that surrounds the first ring, upon the arrangement of the first ring being shrunk, in accordance with the search command.

The control unit may control the UI generation unit to enlarge the searched sub-menu and the corresponding icon, upon the searched upper menu and the corresponding icon being positioned on the vertical center axis of the screen, in accordance with the search command.

The foregoing and/or other aspects of the present general inventive concept may also be achieved by providing a user interface device including a user interface (UI) generation unit to generate a perspective view of a plurality of upper menus and corresponding icons which are arranged about a ring, and a control unit to control the UI generation unit to move the entire arrangement about the ring upon any one of the plurality of upper menus being selected, in accordance with a selection command.

The control unit may control the UI generation unit to enlarge and display the upper menu searched among the plurality of upper menus to a horizontal center axis of a display screen.

If any one of the plurality of upper menus is selected, the control unit may control the UI generation unit to arrange a plurality of sub-menus of the selected upper menu to the horizontal center axis of the screen.

If any one of the plurality of upper menus is selected, the control unit may control the UI generation unit to arrange a plurality of sub-menus of the selected upper menu onto an arc formed around the selected upper menu.

The foregoing and/or other aspects of the present general inventive concept may also be achieved by providing a user interface including a menu storage unit to store specified menus, a prompt icon storage unit to store prompt icons, and a control unit to combine the menus stored in the menu storage unit with the icons stored in the prompt icon storage unit and to display the combined menus and icons.

The foregoing and/or other aspects of the present general inventive concept may also be achieved by providing a method of implementing a user interface, the method including reading menus stored in a menu storage unit, reading prompt icons stored in a prompt icon storage unit, and combining the menus with the prompt icons and displaying the combined menus and icons.

The foregoing and/or other aspects of the present invention general inventive concept may also be achieved by providing a computer readable recording medium having embodied thereon a computer program to execute a method of displaying a user interface, the method including reading menus stored in a menu storage unit, reading prompt icons stored in a prompt icon storage unit, and combining the menus with the prompt icons and displaying the combined menus and icons.

The foregoing and/or other aspects of the present invention general inventive concept may also be achieved by providing a computer readable recording medium having embodied thereon a computer program to execute a method of displaying a user interface, the method including generating an image to display a menu layer about an axis of a display screen; moving items in the menu about the axis of the display screen, and displaying a prompt icon together with the moving menu on the display screen.

The foregoing and/or other aspects of the present invention general inventive concept may also be achieved by providing a method of a user interface in a user interface device, the method including providing a perspective view of an arrangement of a plurality of upper menus and corresponding icons about a first type manner to be displayable on a display screen of a display device, rotating the arrangement about the first ring so that one of the plurality of upper menus with its corresponding icon is searched, and the searched upper menu and its corresponding icon is positioned at a specified area of the display screen, and providing a second view of an arrangement of a plurality of sub-menus and corresponding second icons about a second type manner to be displayable on the display screen of the display device when one of the plurality of upper menus is selected.

The foregoing and/or other aspects of the present invention general inventive concept may also be achieved by providing a computer readable recording medium having embodied thereon a computer program to execute a method of displaying a user interface, the method including providing a perspective view of an arrangement of a plurality of upper menus and corresponding icons about a first type manner to be displayable on a display screen of a display device; rotating the arrangement about the first ring so that one of the plurality of upper menus with its corresponding icon is searched, and the searched upper menu and its corresponding icon is positioned at a specified area of the display screen; and providing a second view of an arrangement of a plurality of sub-menus and corresponding second icons about a second type manner to be displayable on the display screen of the display device when one of the plurality of upper menus is selected.

The foregoing and/or other aspects of the present invention general inventive concept may also be achieved by providing a user interface device including a storage unit to store a plurality of upper menus and corresponding icons and a plurality of sub-menus and corresponding second icons, and a control unit to provide a perspective view of an arrangement of the plurality of upper menus and the corresponding icons about a first type manner to be displayable on a display screen of a display device, to rotate the arrangement about the first ring so that one of the plurality of upper menus with its corresponding icon is searched, and the searched upper menu and its corresponding icon is positioned at a specified area of the display screen, and to provide a second view of an arrangement of the plurality of sub-menus and the corresponding second icons about a second type manner to be displayable on the display screen of the display device when one of the plurality of upper menus is selected.

The foregoing and/or other aspects of the present invention general inventive concept may also be achieved by providing a user interface including a first menu layer arrayed in a first ring type manner, the first menu layer including at least one or more menus to be displayable on a display screen, and a second menu layer arrayed in a second ring type manner, the second menu layer including sub-menus to correspond to the menus of the first menu layer and to be displayable on the display screen, wherein if one of the menus included in the first menu layer is selected, the first menu layer is moved in a specified direction, and the first menu layer and the second menu layer are displayable on the display screen to be movable about a common center axis of the display screen.

The first menu layer may include first icons corresponding to the respective menus, and the second menu layer may include second icons corresponding to the respective sub-menus.

The first icons may move together with the corresponding first menus, and the second icons may move together with the corresponding second menus.

The foregoing and/or other aspects of the present invention general inventive concept may also be achieved by providing a method of a user interface in a user interface device, the method including providing a first menu layer arrayed in a first ring type manner, the first menu layer including at least one or more menus to be displayable on a display screen, and a second menu layer arrayed in a second ring type manner, the second menu layer including sub-menus to correspond to the menus of the first menu layer and to be displayable on the display screen, if one of the menus included in the first menu layer is selected, moving the first menu layer in a specified direction of the display screen when the first menu move, and displaying the first menu layer and the second menu layer on the display screen to be movable about a common center axis of the display screen.

The foregoing and/or other aspects of the present invention general inventive concept may also be achieved by providing a user interface device including a storage unit to store at least one or more menus and at least one or more second menus, and a control unit to provide a first menu layer arrayed in a first ring type manner, the first menu layer including at least one or more menus to be displayable on a display screen, and a second menu layer arrayed in a second ring type manner, the second menu layer including sub-menus to correspond to the menus of the first menu layer and to be displayable on the display screen, to move the first menu layer in a specified direction of the display screen when the first menu move, and to display the first menu layer and the second menu layer on the display screen to be movable about a common center axis of the display screen.

The foregoing and/or other aspects of the present invention general inventive concept may also be achieved by providing A method of a user interface in a user interface device, the method including generating an image including a menu layer to be displayable on a display screen, the menu layer including a first menu layer to represent a plurality of upper menus of a first menu along a first line of the display screen, and the image to be changed to include a second menu layer to represent a plurality of sub-menus of a second menu along a second line of the display screen to correspond to a selected one of the plurality of upper menus of the first menu, together with the selected upper menu of the first menu.

The foregoing and/or other aspects of the present invention general inventive concept may also be achieved by providing a computer readable recording medium having embodied thereon a computer program to execute a method of displaying a user interface, the method including generating an image including a menu layer to be displayable on a display screen, the menu layer including a first menu layer to represent a plurality of upper menus of a first menu along a first line of the display screen, and the image to be changed to include a second menu layer to represent a plurality of sub-menus of a second menu along a second line of the display screen to correspond to a selected one of the plurality of upper menus of the first menu, together with the selected upper menu of the first menu.

The foregoing and/or other aspects of the present invention general inventive concept may also be achieved by providing a user interface usable in a user interface of an electronic device, including a menu layer to be displayable on a display screen, and including a first menu layer to represent a plurality of upper menus of a first menu along a first line of the display screen, and the menu layer to be changed to include a second menu layer to represent a plurality of sub-menus of a second menu along a second line of the display screen to correspond to a selected one of the plurality of upper menus of the first menu, together with the selected upper menu of the first menu.

The foregoing and/or other aspects of the present invention general inventive concept may also be achieved by providing a user interface device usable in an electronic device, including a storage unit to store a first menu having a plurality of upper menus, and a control unit to generate a signal representing an image to be displayable on a display screen, the image including the plurality of upper menus of the first menu along a line of the display screen, and to control the image to move the plurality of upper menus of the first menu along the line of the display screen.

The image may include a first image including the plurality of upper menus of the menu within the display screen, and a second image modified from the first image to have a second plurality of the upper menus of the menu different from the plurality of upper menus of the menu when one of the plurality of upper menus is selected.

The foregoing and/or other aspects of the present invention general inventive concept may also be achieved by providing an electronic device including a storage unit to store a first menu having a plurality of upper menus, a display unit, and a control unit to generate a signal representing an image to be displayable on a display screen of the display unit, the image including the plurality of upper menus of the first menu along a line of the display screen of the display unit, and to control the image to move the plurality of upper menus of the first menu along the line of the display screen of the display unit.

### BRIEF DESCRIPTION OF THE DRAWINGS

These and/or other aspects and advantages of the present general inventive concept will become apparent and more readily appreciated from the following description of the embodiments, taken in conjunction with the accompanying drawings of which:

FIG. 1 is a block diagram schematically illustrating the construction of a user interface device according to an embodiment of the present general inventive concept;

FIGS. 2A to 2D are exemplary views illustrating the structure of a user interface according to an embodiment of the present general inventive concept;

FIGS. 3A to 3D are exemplary views illustrating the structure of a user interface according to another embodiment of the present general inventive concept;

FIGS. 4A to 4E are exemplary views illustrating the structure of a user interface according to another embodiment of the present general inventive concept; and

FIG. 5 is an exemplary view illustrating a setting menu to change a design of a user interface according to an embodiment of the present general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

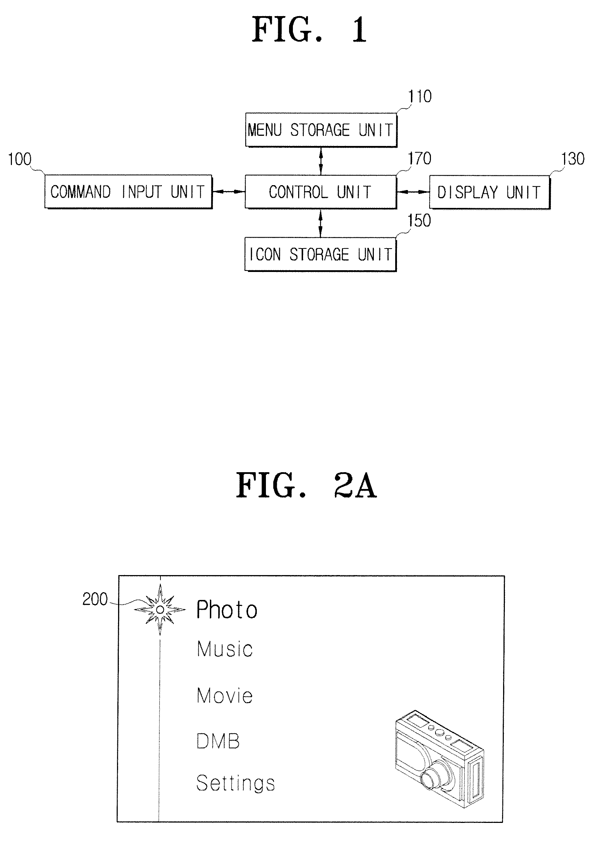

FIG. 1 is a block diagram schematically illustrating a user interface device according to an embodiment of the present general inventive concept.

Referring to FIG. 1, the user interface device according to an embodiment of the present general inventive concept includes a command input unit 100, a menu storage unit 110, a display unit 130, an icon storage unit 150, and a control unit 170.

The command input unit 100 receives various kinds of commands from a user, and transfers the received commands to the control unit 170 to be described later. The command input unit 100 is provided with a human interface, such as a plurality of manipulation keys required for a user to search menus and enter signals corresponding to the command. The command input unit 100 may receive a user command transmitted from an external manipulation device and transfer the received user command to the control unit 170,

In the menu storage unit 110, menus constituting a user interface and arrangement states of the menus are stored. Also, the structure of the user interface set by a setting command is stored in the menu storage unit 110. In the icon storage unit 150, one or more variously shaped prompt icons in the form of a circular plate, loop, and star, for example, to correspond to the menus are stored.

The control unit 170 generates the user interface by combining the menus stored in the menu storage unit 110 with the prompt icons stored in the icon storage unit 150. The generated user interface is displayed on the display unit 130, and a user can search for a desired menu as the user views the user interface displayed on the display unit 130.

The control unit 170 may generate the user interface with a predetermined arrangement. If a user inputs a search command by manipulating a specified key in order to search for a desired menu, the control unit 170 controls the searched menu and the corresponding icon to be enlarged and displayed on the display unit. The control unit 170 may control a conspicuous image, such as a continuously glittering prompt icon, for example, to be displayed on one side of the searched menu.

In addition, the control unit 170 adjusts a position of an upper menu being displayed on the display screen as the menu moves to sub-menus, and thus the user can be more fully aware of the progress of the selected menu.

The implementation of the user interface as described above may be performed by a user interface (UI) generation unit (not illustrated) included in the control unit 170. The user interface generation performed by the control unit 170 will be explained in more detail with reference to FIGS. 2A to 5.

FIGS. 2A to 2D are exemplary views illustrating the structure of a user interface displayable on a screen of a display device according to an embodiment of the present general inventive concept.

FIG. 2A shows a user interface in which upper menus (e.g., Photo, Music, Movie, DMB (digital multimedia broadcasting), and Settings) are arranged, for example, on a vertical line. Referring to FIGS. 1 and 2A, when a user inputs a search command for menu search through the command input unit 100, a first prompt icon 200 is displayed, preferably, but not necessarily, on one side of the menu that is being searched. The first prompt icon 200 is shown in FIG. 2A, for example, as being displayed as a continuously glittering ray, and may take on other diverse forms such as a circular plate, loop, star, and so forth. The first prompt icons 200 are stored in the icon storage unit 150, and the user can select and use the first prompt icon 200.

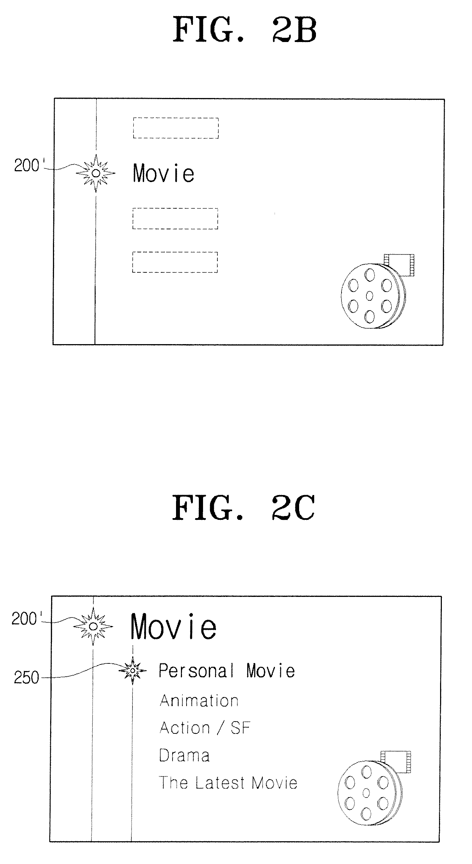

Referring to FIG. 2B, with the movement of the first prompt icon 200, the upper menus (e.g., Photo, Music, Movie, DMB, and Settings) are scrolled up and down for the case when the menus are aligned in a vertical pattern. Only the menu (e.g., Movie) selected by the selection command inputted by the user is displayed on the screen, and other menus (e.g., Photo, Music, DMB, and Settings), except for the selected menu (e.g., Movie), may disappear or be de-emphasized from the screen. At this time, the first prompt icon 200' is displayed on one side of the selected menu with a reduced or altered state, for example, a fixed brightness, i.e., without continuously glittering.

After the non-selected upper menus (e.g., Photo, Music, DMB, and Settings), are altered, sub-menus (e.g., Personal Movie, Animation, Action/SF, Drama, and The Last Movie) of the selected upper menu (e.g., Movie) are displayed, as shown in FIG. 2C.

If the user proceeds to input a search command through the command input unit 100 for the menu search, a second prompt icon 250 is displayed on one side of the sub-menu selected among the sub-menus (e.g., Personal Movie, Animation, Action/SF, Drama, and The Last Movie), in a similar manner as the upper menus (e.g., Photo, Music, Movie, DMB, and Settings). Here, the user can set the second prompt icon 250 so that it is displayed with a form or size different from the first prompt icon 200. The second prompt icon 250 may be smaller than or different from the first prompt icon 200' in size or form.

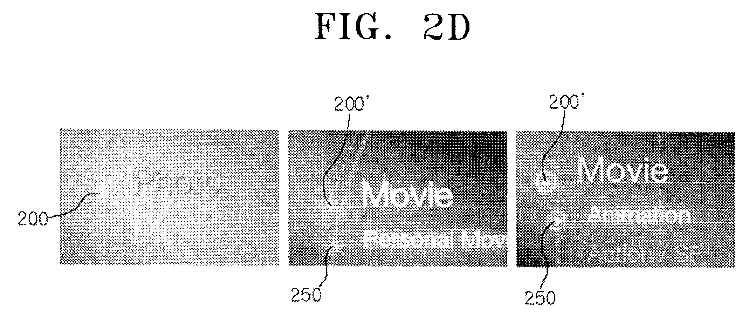

FIG. 2D shows examples of the user interface according to an embodiment of the present invention. The background of the user interface and the form or arrangement of the menus as illustrated in FIG. 2D are stored in the menu storage unit 110, and then changed and displayed on the screen according to the user's command. Also, the form of the prompt icons 200, 200', and 250 are stored in the icon storage unit 150, and then changed and displayed on the screen, together with the menus, according to the user's command.

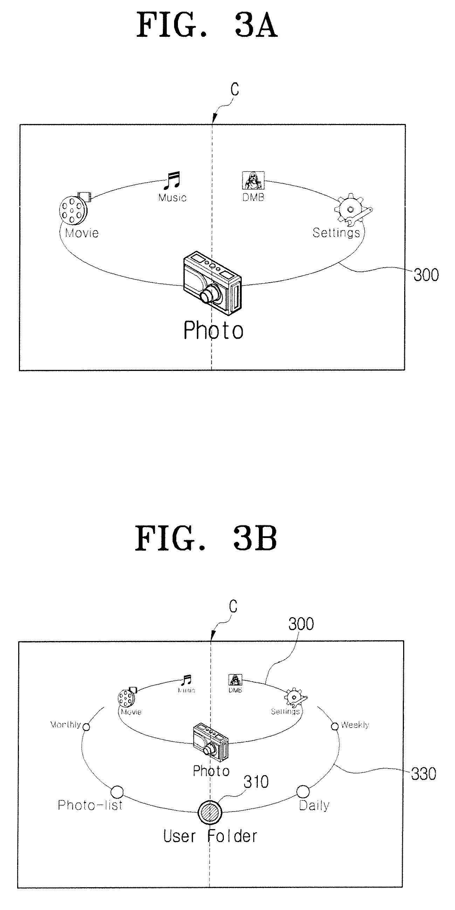

FIGS. 3A to 3D are exemplary views illustrating a user interface displayable on a screen of a display device according to another embodiment of the present general inventive concept.

FIG. 3A illustrates a user interface, in which upper menus (e.g., Photo, Music, Movie, DMB, and Settings) are perspectively arranged on a first ring 300 having a perspective appearance. Icons corresponding to the perspectively arranged upper menus (e.g., Photo, Music, Movie, DMB, and Settings) are also three-dimensionally displayed on the screen. Referring to FIGS. 1 and 3A, if a user inputs a search command for menu search through the command input unit 100, the upper menus (e.g., Photo, Music, Movie, DMB, and Settings) are rotated around a center axis C, and the searched upper menu (e.g., Photo) is displayed on the screen, as illustrated in FIG. 3A. That is, the searched upper menu (e.g., Photo) and the corresponding icon are displayed on the center axis C with an enlarged appearance compared to other upper menus, so that the searched upper menu and the corresponding icon appear to be in a position which is closest to the user.

When the searched upper menu (e.g., Photo) with the corresponding icon is positioned on the center axis C, first sub-menus (e.g., User Folder, Daily, Weekly, Monthly, and Photo-list) are displayed at the forefront of the screen as illustrated, for example, in FIG. 3B. That is, the size of the first ring 300 and the sizes of the upper menus (e.g., Photo, Music, Movie, DMB, and Settings) and corresponding icons arranged on the first ring 300 become smaller, and a second ring 330 having a perspective appearance of the first sub-menus is formed around the first ring 300.

The first sub-menus (e.g., User Folder, Daily, Weekly, Monthly, and Photo-list) are perspectively arranged on the second ring 330. The first sub-menus (e.g., User Folder, Daily, Weekly, Monthly, and Photo-list) arranged on the second ring 330 may be rotated around the center axis C according to the user's search command, and the searched sub-menu (e.g., User Folder) with the corresponding first prompt icon 310 is displayed on the center axis C with an enlarged appearance compared to other first sub-menus. As illustrated in FIG. 3B, the first prompt icon 310 may be displayed on the screen as a continuously glittering ray, for example.

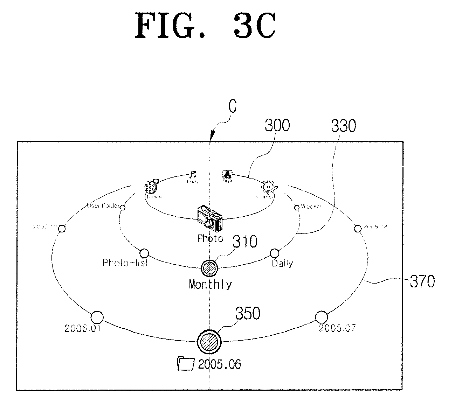

If the searched sub-menu (e.g., Monthly) is selected among the first sub-menus (e.g., User Folder, Daily, Weekly, Monthly, and Photo-list), second sub-menus (e.g., 2005.06 - 2006.01) are displayed on the screen as illustrated in FIG. 3C. That is, as the sizes of the first ring 300 and the second ring 330 become smaller, a third ring 370 having a perspective appearance is formed around the second ring 330.

The second sub-menus (e.g., 2005.06 - 2006.01) are perspectively arranged on the third ring 370. The second sub-menus (e.g., 2005.06 - 2006.01) may be rotated around the center axis C according to the user's search command, and the searched second sub-menu (e.g., 2005.06) and the corresponding second prompt icon 350 are displayed on the center axis C, with an enlarged appearance compared to other second sub-menus and may also be given the attribute, of a continuously glittering ray, for example.

Here, the icons corresponding to the first sub-menus (e.g., User Folder, Daily, Weekly, Monthly, and Photo-list) and the second sub-menus (e.g., 2005.06 - 2006.01) represent styles or shapes of light, which may have diverse forms such as a circular plate, loop, star, and so forth. The icons having diverse forms as described above are stored in the menu storage unit 150, and the user can select and use the stored icons.

As illustrated in FIG. 3C, the respective menus are arranged similar to that of planets revolving round a fixed star, or some variation thereof. Specifically, the upper menus, the first sub-menus, and the second sub-menus are respectively arranged on the first ring 300, the second ring 330, and the third ring 370, which have a common center, and thus the user can quickly confirm the position of the selected menu with respect to the other various menu items. The background of the menus, font and the form of the prompt icon, for example, can be changed according to the user's desire.

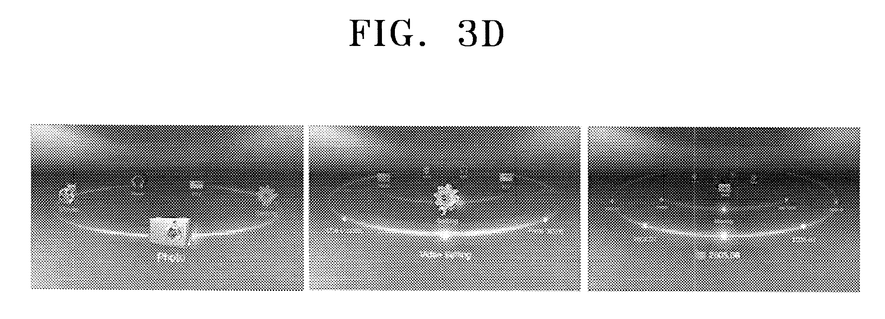

FIG. 3D illustrates three dimensional user interface actually implemented on the display screen in accordance with the structures as illustrated in FIGS. 3A to 3C. The background of the menus, font and the form of the prompt icon, as illustrated in FIG. 3D, can be changed according to a user' command.

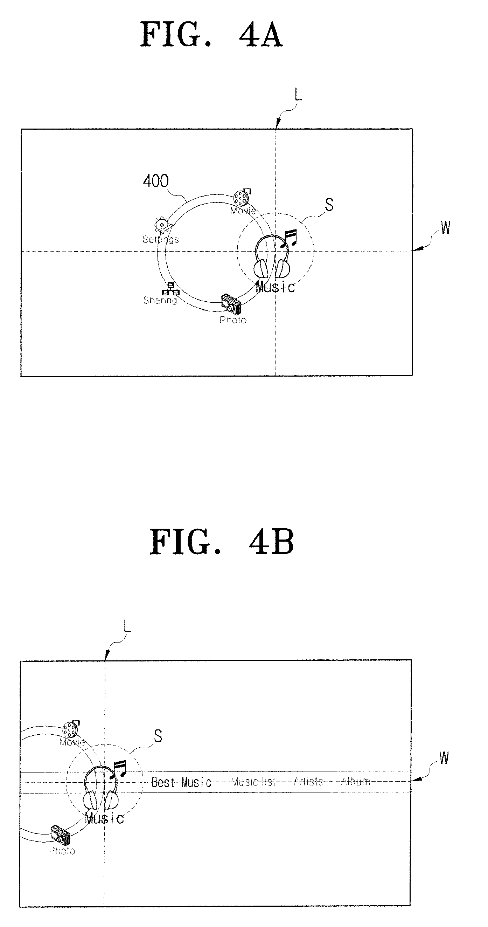

FIGS. 4A to 4E are exemplary views illustrating the structure of a user interface according to still another embodiment of the present general inventive concept. A

FIG. 4A shows a user interface, in which upper menus (e.g., Photo, Music, Movie, Sharing, and Settings) and their corresponding icons are arranged on a ring 400. The menu (e.g., Music) searched in accordance with a search command is positioned in a place S where a vertical axis L and a horizontal axis W meet each other, and the searched upper menu (e.g., Music) with the corresponding icon is displayed with a size larger than those of other non-searched menus (e.g., Photo, Movie, Sharing, and Settings) and their corresponding icons.

When the user selects the searched menu (e.g., Music), the vertical axis L is moved to the left and all the upper menus (e.g., Photo, Music, Movie, Sharing, and Settings) are moved to the left, as illustrated, for example, in FIG. 4B. After the movement of the upper menus, first sub-menus (e.g., Best Music, Music list, Artists, and Album) of the selected upper menu (e.g., Music) are arranged on the horizontal axis W.

In accordance with the user's search command, the searched first sub- menu (e.g., Best Music) among the first sub-menus (e.g., Best Music, Music list, Artists, and Album) is displayed with a more conspicuous attribute, for example with an increased size, brightness, and/or darkness than of the other non-searched menus (e.g., Music list, Artists, and Album), and thus the user can visually confirm the selection of the menu being searched as well as easily view the location of the nearby menus/sub-menus.

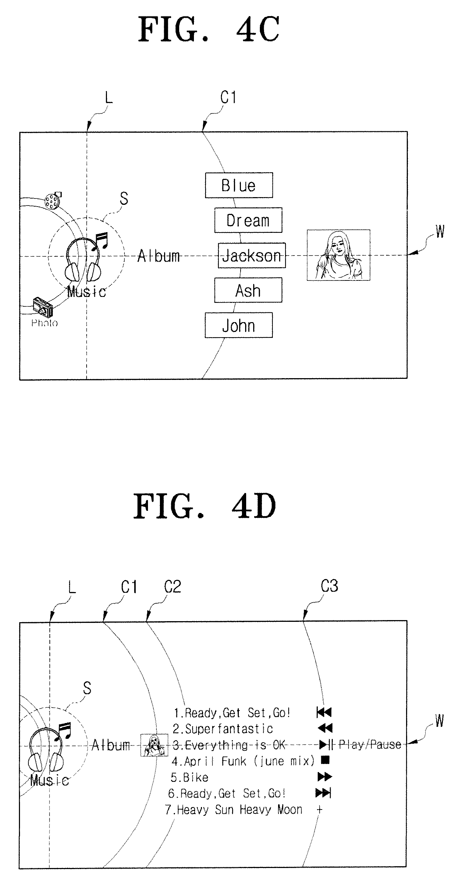

Referring to FIG. 4C, second sub-menus (e.g., Blue, Dream, Jackson, Ash, and John) of the menu (e.g., Album) selected among the first sub-menus (e.g., Best Music, Music list, Artists, and Album) are arranged along a first arc C1. The searched menu (e.g., Jackson) among the second sub-menus (e.g., Blue, Dream, Jackson, Ash, and John) is positioned on the horizontal axis W, and a preview image that corresponds to the searched menu (e.g., Jackson) is displayed on the right part of the screen.

If the searched menu (e.g., Jackson) is selected, then as shown in FIG. 4D, third sub-menus (e.g., 1.Ready, Get Set, Go!; 2. Super fantastic; 3. Everything is OK; 4. April Funk (june mix); 5. Bike; 6. Ready, Get Set, Go!; 7. Heavy Sun Heavy Moon) are arranged along a second arc C2. If the sub-menu (e.g., 3.Everything is OK) is positioned on the horizontal axis W and selected, then fourth sub-menus (shown in FIG. 4D as symbols corresponding to: Reverse skip; Reverse; Play/Pause; Stop; Fast Forward; and Forward skip, (e.g., |◄◄, ◄◄, ►∥,■,►►, ►►|,+) are displayed along a second arc C3. The searched menu (e.g., ►∥) among the fourth sub-menus (e.g., |◄◄,◄◄,►∥,■,►►,►►|,+) is positioned on the horizontal axis W, and if the menu (e.g., ►∥) is selected according to the selection command, an explanation or status of the sub-menu item (e.g., Play/Pause) is displayed, and the selected sub-menu in the next upper menu (e.g., 3.Everything is OK) is activated or operated on by the current sub-menu item (e.g., played or paused). While FIG. 4D shows the menus and sub-menus in the context of a music player with some of the menus/sub-menus operating only as informational nodes (e.g., Artist's name, Album name, etc.) segueing into other menus/sub-menus, and some of the menus/sub-menus operating as a functional menu (e.g., play function/pause function, etc.), alternative information-functions-operations may be implemented, according to design preference and to the capabilities of the electronic appliance.

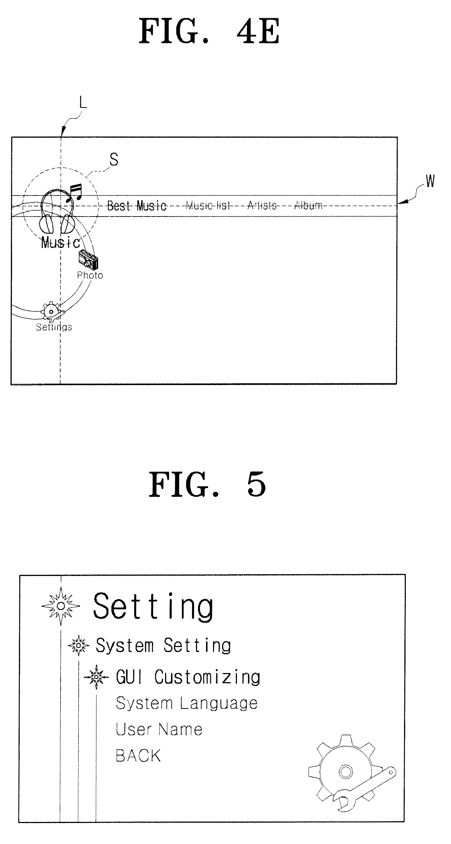

FIG. 4E illustrates an example of another user interface according to an embodiment of the present general inventive concept in which the horizontal axis W and the vertical axis L have been modified. The menu (e.g., Music) searched according to the search command is positioned in a place S where the vertical axis L and the horizontal axis W meet each other, and the searched menu (e.g., Music) and the corresponding icon are displayed with a modified attribute (e.g., size is enlarged) to those of the non-searched menus (e.g., Photo, Movie, Sharing, and Settings) and to the corresponding icons. The sub-menus selected according to the user's command are displayed on the user input 405 in a manner similar to those discussed above.

FIG. 5 is an exemplary view illustrating a setting menu to change a design of a user interface according to an embodiment of the present general inventive concept.

Referring to FIG. 5, a configuration or setting menu (e.g., GUI Customizing) to change the design or layout of the user interface is included in a system setting menu (e.g., System Setting) of a setting menu (e.g., Setting). The user can additionally change the visual appearance of the menus/sub-menus of the user interface as well as the font, style, size of characters, colors, etc., that constitute the menus, through the setting menu (e.g., GUI Customizing).

It should be appreciated that the menu arrangement can be changed to an arrangement on a vertical line or a curve, and the form of the icon corresponding to the menu can be changed as well. In addition, the glittering prompt icons 200 and 250, as described above with reference to FIGS. 2A to 2C, can be set to be in the form of a circular plate, loop, star, and so forth. Such settings are not limited to those as illustrated in FIGS. 2A to 2C, but can be applied to other embodiments of the present general inventive concept.

Exemplary embodiments, processes and procedures of the present general inventive concept can be software implementable as a program/instruction/code in resident memory or in removable memory, such as computer readable recording media, which can be implemented in various electronic appliances. Examples of the computer-readable recording medium can be magnetic storage media (e.g., ROM, floppy disks, hard disks, etc.), optical recording media (e.g., CD-ROMs, or DVDs), and storage media such as RAM, Flash, Secure Digital, Memory Stick®, etc. The computer-readable recording medium can also be distributed over network coupled computer systems so that the computer-readable code is stored and executed in a distributed fashion. Also, functional programs, codes, and code segments for accomplishing embodiments of the present general inventive concept can be easily construed by programmers skilled in the art to which the present general inventive concept pertains.

As described above, according to various exemplary embodiment of the present general inventive concept, the user interface is implemented enabling a user to easily find the position of a selected menu, and thus the user can easily manipulate the functions of electronic appliances. In addition, the user interface is implemented with a greater degree of customability, and thus it can prevent the user from feeling bored from use of the electronic appliances.

Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents.

## Claims

1. A user interface comprising:
a first menu layer arrayed in a first ring type manner, the first menu layer including at least one or more menus; and
a second menu layer arrayed in a second ring type manner, the second menu layer including sub-menus corresponding to the menus of the first menu layer;
wherein the first menu layer and the second menu layer are displayable on a display screen to be rotatable about a common center axis of the display screen.

2. The user interface of claim 1, further comprising:
a third menu layer arrayed in a third ring type manner, the third menu layer including sub-menus corresponding to the menus of the second menu layer;
wherein the first menu layer, the second menu layer, and the third menu layer are displayable on the display screen to be rotatable about the common center axis.

3. The user interface of claim 1, wherein:
if one of the menus included in the first menu layer is selected, the second menu layer containing the sub-menus of the selected menu may be actualized;
at least one of the ring arrangement and size of the first menu layer is reduced; and
the actualized ring arrangement of the second menu layer may be formed to one side of the first menu layer.

4. A method of implementing a user interface, the method comprising:
providing a perspective view of an arrangement of a plurality of upper menus and corresponding icons about a first ring to be displayable on a display device; and
rotating the arrangement about the first ring so that one of the plurality of upper menus with its corresponding icon is searched, and the searched upper menu and its corresponding icon is positioned at a specified area of the display screen.

5. The method of claim 4, wherein the rotating of the arrangement about the first ring comprises:
rotating the arrangement about the first ring so that the searched upper menu and its corresponding icon are positioned on a vertical center axis of the display screen; and
enlarging the searched upper menu and its corresponding icon.

6. The method of claim 4, further comprising:
upon the searched upper menu being selected, shrinking the first ring's arrangement; and
providing a second perspective view of an arrangement of a plurality of sub-menus of the selected upper menu and corresponding icons about a second ring that surrounds the first ring.

7. The method of claim 6, further comprising:
rotating the searched sub-menu and its corresponding icon so as to position the searched sub-menu and its corresponding icon on the vertical center axis of the screen; and
enlarging the searched sub-menu and the corresponding icon.

8. A user interface comprising:
a first menu layer including at least one or more menus to be displayable on a display screen; and
a second menu layer including sub-menus of the menus included in the first menu layer to be displayable on the display screen;
wherein if any one of the menus included in the first menu layer is selected, the first menu layer is moved in a specified direction.

9. The user interface of claim 8, wherein the first menu layer and the second menu layer move their respective menus around a common center axis of the display screen, and the center axis is changeable.

10. A method of implementing a user interface with respect to a specified menu, the method comprising:
displaying a menu on a display screen;
moving the menu in the display screen; and
displaying a prompt icon together with the moving menu.

11. The method of claim 10, further comprising:
changing the prompt icon; and
displaying the changed prompt icon.

12. The method of claim 10, wherein the displaying of the prompt icon comprises displaying the prompt icon in a form of at least one of a starlight and a circle.

13. The method of claim 10, wherein the moving of the menu comprises scrolling up and down in the display screen according to a user search command.

14. The method of claim 10, further comprising:
upon a the searched menu being selected, displaying the prompt icon with a predetermined brightness.

15. A user interface device comprising:
a user interface (UI) generation unit to generate a perspective view of a plurality of upper menus and corresponding icons which are arranged about a first ring; and
a control unit to control the UI generation unit to position a searched upper menu and the corresponding icon to a specified area of a display screen, in accordance with a search command.

16. The user interface device of claim 15, wherein the control unit controls the UI generation unit to rotate the plurality of upper menus and corresponding icons about the first ring, and enlarge and position the searched upper menu and the corresponding icon to a vertical center axis of a display screen, in accordance with the search command.

17. The user interface device of claim 15, wherein the control unit controls the UI generation unit to generate a perspective view of a plurality of sub-menus and corresponding icons which are arranged on a second ring that surrounds the first ring, upon the arrangement of the first ring being shrunk in accordance with the select command.

18. The user interface device of claim 17, wherein the control unit controls the UI generation unit to enlarge the searched sub-menu and the corresponding icon, upon the searched upper menu and the corresponding icon being positioned on the vertical center axis of the screen, in accordance with the search command.

19. A user interface device comprising:
a user interface (UI) generation unit to generate perspective view of a plurality of upper menus and corresponding icons which are arranged about a ring; and
a control unit to control the UI generation unit to move the entire arrangement about the ring upon any one of the plurality of upper menus being selected, in accordance with a selection command.

20. The user interface device of claim 19, wherein the control unit controls the UI generation unit to enlarge and display the upper menu searched among the plurality of upper menus to a horizontal center axis of a display screen.

21. The user interface device of claim 19, wherein upon any one of the plurality of upper menus being selected, the control unit controls the UI generation unit to arrange a plurality of sub-menus of the selected upper menu to the horizontal center axis of the screen.

22. The user interface device of claim 19, wherein upon any one of the plurality of upper menus being selected, the control unit controls the UI generation unit to arrange a plurality of sub-menus of the selected upper menu onto an arc formed around the selected upper menu.

23. A user interface device, comprising:
a menu storage unit to store specified menus;
a prompt icon storage unit to store prompt icons; and
a control unit to combine the menus stored in the menu storage unit with the icons stored in the prompt icon storage unit, and to display the combined menus and icons.

24. A method of implementing a user interface in a user interface device, the method comprising:
reading menus stored in a menu storage unit;
reading prompt icons stored in a prompt icon storage unit; and
combining the menus with the prompt icons and displaying the combined menus and icons.

25. A computer readable recording medium having embodied thereon a computer program to execute a method of displaying a user interface, the method comprising:
reading menus stored in a menu storage unit;
reading prompt icons stored in a prompt icon storage unit; and
combining the menus with the prompt icons and displaying the combined menus and icons.

26. A computer readable recording medium having embodied thereon a computer program to execute a method of displaying a user interface, the method comprising:
generating an image to display a menu layer about an axis of a display screen;
moving items in the menu about the axis of the display screen; and
displaying a prompt icon together with the moving menu on the display screen.

27. A method of a user interface in a user interface device, the method comprising:
providing a perspective view of an arrangement of a plurality of upper menus and corresponding icons about a first type manner to be displayable on a display screen of a display device;
rotating the arrangement about the first ring so that one of the plurality of upper menus with its corresponding icon is searched, and the searched upper menu and its corresponding icon is positioned at a specified area of the display screen; and
providing a second view of an arrangement of a plurality of sub-menus and corresponding second icons about a second type manner to be displayable on the display screen of the display device when one of the plurality of upper menus is selected.

28. A computer readable recording medium having embodied thereon a computer program to execute a method of displaying a user interface, the method comprising:
providing a perspective view of an arrangement of a plurality of upper menus and corresponding icons about a first type manner to be displayable on a display screen of a display device;
rotating the arrangement about the first ring so that one of the plurality of upper menus with its corresponding icon is searched, and the searched upper menu and its corresponding icon is positioned at a specified area of the display screen; and
providing a second view of an arrangement of a plurality of sub-menus and corresponding second icons about a second type manner to be displayable on the display screen of the display device when one of the plurality of upper menus is selected.

29. A user interface device comprising:
a storage unit to store a plurality of upper menus and corresponding icons and a plurality of sub-menus and corresponding second icons; and
a control unit to provide a perspective view of an arrangement of the plurality of upper menus and the corresponding icons about a first type manner to be displayable on a display screen of a display device, to rotate the arrangement about the first ring so that one of the plurality of upper menus with its corresponding icon is searched, and the searched upper menu and its corresponding icon is positioned at a specified area of the display screen, and to provide a second view of an arrangement of the plurality of sub-menus and the corresponding second icons about a second type manner to be displayable on the display screen of the display device when one of the plurality of upper menus is selected.

30. A user interface comprising:
a first menu layer arrayed in a first ring type manner, the first menu layer including at least one or more menus to be displayable on a display screen; and
a second menu layer arrayed in a second ring type manner, the second menu layer including sub-menus to correspond to the menus of the first menu layer and to be displayable on the display screen,
wherein if one of the menus included in the first menu layer is selected, the first menu layer is moved in a specified direction, and the first menu layer and the second menu layer are displayable on the display screen to be movable about a common center axis of the display screen.

31. The user interface of claim 30, wherein the first menu layer comprises first icons corresponding to the respective menus, and the second menu layer comprises second icons corresponding to the respective sub-menus.

32. The user interface of claim 31, wherein the first icons move together with the corresponding first menus, and the second icons move together with the corresponding second menus.

33. A method of a user interface in a user interface device, the method comprising:
providing a first menu layer arrayed in a first ring type manner, the first menu layer including at least one or more menus to be displayable on a display screen, and a second menu layer arrayed in a second ring type manner, the second menu layer including sub-menus to correspond to the menus of the first menu layer and to be displayable on the display screen;
if one of the menus included in the first menu layer is selected, moving the first menu layer in a specified direction of the display screen when the first menu move; and
displaying the first menu layer and the second menu layer on the display screen to be movable about a common center axis of the display screen.

34. The user interface of claim 33, wherein the providing of the first menu layer and the second menu layer comprises providing first icons corresponding to the respective menus, and second icons corresponding to the respective sub-menus.

35. The user interface of claim 34, wherein the displaying of the first menu layer and the second menu layer comprises moving the first icons together with the corresponding first menus when the first menus move, and the second icons together with the corresponding second menus when the second menus move.

36. A user interface device comprising:
a storage unit to store at least one or more menus and at least one or more second menus; and
a control unit to provide a first menu layer arrayed in a first ring type manner, the first menu layer including at least one or more menus to be displayable on a display screen, and a second menu layer arrayed in a second ring type manner, the second menu layer including sub-menus to correspond to the menus of the first menu layer and to be displayable on the display screen, to move the first menu layer in a specified direction of the display screen when the first menu move, and to display the first menu layer and the second menu layer on the display screen to be movable about a common center axis of the display screen.

37. A method of a user interface in a user interface device, the method comprising:
generating an image including a menu layer to be displayable on a display screen, the menu layer including a first menu layer to represent a plurality of upper menus of a first menu along a first line of the display screen, and the image to be changed to include a second menu layer to represent a plurality of sub-menus of a second menu along a second line of the display screen to correspond to a selected one of the plurality of upper menus of the first menu, together with the selected upper menu of the first menu.

38. A computer readable recording medium having embodied thereon a computer program to execute a method of displaying a user interface, the method comprising:
generating an image including a menu layer to be displayable on a display screen, the menu layer including a first menu layer to represent a plurality of upper menus of a first menu along a first line of the display screen, and the image to be changed to include a second menu layer to represent a plurality of sub-menus of a second menu along a second line of the display screen to correspond to a selected one of the plurality of upper menus of the first menu, together with the selected upper menu of the first menu.

39. A user interface usable in a user interface of an electronic device, comprising:
a menu layer to be displayable on a display screen, and including a first menu layer to represent a plurality of upper menus of a first menu along a first line of the display screen, and the menu layer to be changed to include a second menu layer to represent a plurality of sub-menus of a second menu along a second line of the display screen to correspond to a selected one of the plurality of upper menus of the first menu, together with the selected upper menu of the first menu.

40. A user interface device usable in an electronic device, comprising:
a storage unit to store a first menu having a plurality of upper menus; and
a control unit to generate a signal representing an image to be displayable on a display screen, the image including the plurality of upper menus of the first menu along a line of the display screen, and to control the image to move the plurality of upper menus of the first menu along the line of the display screen.

41. The user interface of claim 39, wherein the image comprises a first image including the plurality of upper menus of the menu within the display screen, and a second image modified from the first image to have a second plurality of the upper menus of the menu different from the plurality of upper menus of the menu when one of the plurality of upper menus is selected.

42. An electronic device comprising:
a storage unit to store a first menu having a plurality of upper menus;
a display unit; and
a control unit to generate a signal representing an image to be displayable on a display screen of the display unit, the image including the plurality of upper menus of the first menu along a line of the display screen of the display unit, and to control the image to move the plurality of upper menus of the first menu along the line of the display screen of the display unit.
